# EUROPÄISCHE PATENTSCHRIFT

(11) **EP 1 497 895 B1**
(45) Veröffentlichungstag und Bekanntmachung des Hinweises auf die Patenterteilung: **05.10.2005**
(21) Anmeldenummer: 03732206.2
(22) Anmeldetag: 09.04.2003
(51) Int. Cl.: H01R 35/02, B60R 16/02

(54) **ELEKTRISCHE VERBINDUNGSEINRICHTUNG**
ELECTRIC CONNECTING DEVICE
CONNECTEUR ELECTRIQUE

(30) Priorität: 24.04.2002 DE 10218391; 15.06.2002 DE 10226806
(43) Veröffentlichungstag der Anmeldung: 19.01.2005
(73) Patentinhaber: Delphi Technologies Inc., Troy, MI 48007 (US)
(72) Erfinder: DIETRICH, Andreas, 55452 Guldental (DE)
(74) Vertreter: Becker, Bernd
(86) Internationale Anmeldenummer: PCT/DE2003/001159
(87) Internationale Veröffentlichungsnummer: WO 2003/092126

(56) Entgegenhaltungen:
- US-A- 5 409 389

## Beschreibung

Die Erfindung bezieht sich auf eine elektrische Elektrische Verbindungseinrichtung, insbesondere zur Anordnung zwischen Lenkrad und Lenksäule eines Kraftfahrzeuges, mit einem feststehenden Gehäuseteil und einem dazu verdrehbaren Gehäuseteil, die jeweils eine Anschlusseinheit tragen und mindestens einen spiralförmig aufgewickelten, jeweils endseitig mit den Anschlusseinheiten verbundenen flexiblen elektrischen Leiter umschließen, der in einer richtungsumkehrenden Schleife innerhalb des Gehäuses geführt ist und dem eine formschlüssige Zwangsführung zugeordnet ist, die als dem verdrehbaren Gehäuseteil zugeordnete, in Ausnehmungen des Leiters eingreifende und bei einer Drehbewegung des verdrehbaren Gehäuseteils ein definiertes Ab- bzw. Aufwickeln des Leiters bewirkende Verzahnung ausgebildet ist.

Stromleitungsverbinder dieser Art werden insbesondere zur Herstellung einer elektrischen Verbindung zwischen einer Stromquelle und einer in der Lenkradschüssel angeordneten Gas-Aufprall-Schutzeinrichtung von Kraftfahrzeugen eingesetzt. Hierbei weist ein zwischen dem feststehenden Gehäuseteil und dem dazu verdrehbaren Gehäuseteil angeordneter Leiter eine solche Länge auf, dass es den beidseitig etwa drei Umdrehungen betragenden Lenkradausschlag zu folgen vermag, wobei sich der flexible Leiter während des Lenkradausschlages aus einer mittleren Lage in der einen Richtung bis zur Anlage an dem stationären Gehäuse nach außen aufweitet und in der anderen Richtung bis zur Anlage an dem verdrehbaren Gehäuseteil nach innen zusammenzieht. Bei diesem unkontrollierten Aufweiten und Zusammenziehen des Leiters kommt es jedoch häufig zu Störungen.

Die US-A-5 409 389 offenbart eine elektrische Verbindungseinrichtung, insbesondere zur Anordnung zwischen Lenkrad und Lenkstockschaltermodul eines Kraftfahrzeuges, mit einem feststehenden Gehäuseteil und einem dazu verdrehbaren Gehäuseteil, die jeweils eine Anschlusseinheit tragen und mindestens einen spiralförmig aufgewickelten, jeweils endseitig mit den Anschlusseineheiten verbundenen flexiblen elektrischen Leiter umschließen, der in einer richtungsumkehrenden Schleife innerhalb des Gehäuses geführt ist. Dem Leiter ist eine formschlüssige Zwangsführung zugeordnet, die umfangsseitig am Leiter angreift und bei einer Drehbewegung des verdrehbaren Gehäuseteils ein definiertes Ab- bzw. Aufwickeln des Leiters bewirkt. Die Zwangsführung umfasst eine dem verdrehbaren Gehäuseteil zugeordnete Verzahnung, die in jeweilige Ausnehmungen des Leiters eingreift.

Es ist Aufgabe der Erfindung, eine elektrische Verbindungseinrichtung der eingangs genannten Art zu schaffen, die bei einer Drehbewegung des verdrehbaren Gehäuseteils stets zuverlässig arbeitet.

Erfindungsgemäß wird die Aufgabe dadurch gelöst, dass die Zwangsführung eine dem feststehenden Gehäuseteil zugeordnete Verzahnung umfasst, die in die Ausnehmungen des Leiters eingreift, wobei die Verzahnungen auf einander zugewandten Umfangsflächen der Gehäuseteile angeordnet sind und mehrere Leiter in abwechselnden Lagen in dem Gehäuse angeordnet sind.

Die Elastizität und Vorspannung der in richtungsumkehrenden Schleifen innerhalb des Gehäuses geführten Leiter bewirkt eine permanente Anlage der Leiter sowohl an dem verdrehbaren als auch an dem feststehenden Gehäuseteil und stellt damit das Einliegen der gehäuseseitigen Verzahnungen in den Ausnehmungen der Leiter sicher. Im Weiteren verhindert die Zwangsführung ein Reiben der Leiter an den Gehäuseteilen und reduziert somit eine von den Leitern verursachte Geräuschentwicklung. Zur Übertragung relativ hoher Ströme sind mehrere Leiter in dem Gehäuse angeordnet, wodurch ein relativ großer leitender Querschnitt bereitgestellt ist, der beispielsweise zur Speisung einer Heizung eines Lenkrades eines Kraftfahrzeuges erforderlich ist.

Bevorzugt sind die Verzahnungen einstückig mit dem jeweils zugeordneten Gehäuseteil ausgebildet. Die mit dem jeweiligen im Kunststoffspritzgussverfahren gemeinsam mit dem jeweiligen Gehäuseteil gefertigt, weshalb eine nachträgliche Montage der Verzahnungen mit den Gehäuseteilen entfällt und die Verbindungseinrichtung kostengünstig herstellbar ist.

Um eine verdrehsichere und kippsichere Zwangsführung für den Leiter bereitzustellen, sind zweckmäßigerweise die Ausnehmungen in etwa halber Höhe des Leiters ausgebildet.

Zum Toleranzausgleich sind vorzugsweise die Ausnehmungen als langlochförmige Perforation des Leiters ausgebildet, in die die noppenförmigen Verzahnungen eingreifen. Die Ausnehmungen lassen sich durch Stanzen fertigen und die noppenförmigen Verzahnungen stellen aufgrund ihrer Formgebung eine verschleißarme Mitnahme des Leiters sicher.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:
- Fig.1: eine perspektivische Darstellung einer erfindungsgemäßen elektrischen Verbindungseinrichtung,
- Fig.2: eine vergrößerte Darstellung der Einzelheit II nach Fig. 1 und
- Fig.3: eine perspektivische Darstellung der elektrischen Verbindungseinrichtung nach Fig. 1 in einer alternativen Ausgestaltung.

Die elektrische Verbindungseinrichtung umfasst ein Gehäuse 1, das im Wesentlichen aus einem in einem nicht dargestellten Lenkstockschaltermodul festgelegten Gehäuseteil 2 und einem mit einem nicht dargestellten Lenkrad in Verbindung stehenden, dazu verdrehbaren Gehäuseteil 3 besteht, wobei das Lenkstockschaltermodul mitsamt dem darin festgelegten Gehäuseteil 2 an einem Mantelrohr einer Lenksäule angeordnet ist. Innerhalb des Gehäuses 1 ist ein elektrischer Leiter 4 spiralförmig aufgewickelt, dessen Länge derart bemessen ist, dass das Lenkrad um ca. drei bis vier Umdrehungen verdreht werden kann. Der Leiter 4 ist in einer richtungsumkehrenden Schleife 5 innerhalb des Gehäuses 1 geführt, durch die eine relativ kurze Längenausführung des Leiters 4 möglich ist. An dem dem verdrehbaren Gehäuseteil 3 und dem dem feststehenden Gehäuseteil 2 zugeordneten Ende des Leiters 4 ist jeweils außerhalb des Gehäuses 1 eine Anschlusseinheit zur Kontaktierung des Leiters 4 mit einem Bordnetz über das Lenkstockschaltermodul bzw. mit einem lenkradseitigen Stecker befestigt.

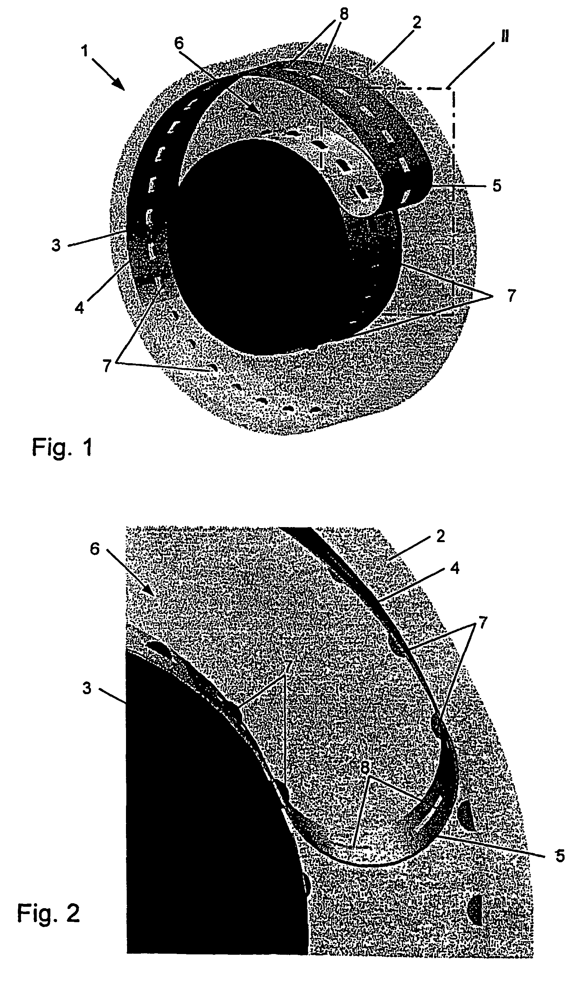

Um ein kontrolliertes Auf- bzw. Abwickeln des Leiters 4 bei einer Drehbewegung des Lenkrades sicherzustellen, ist eine umfangsseitig am Leiter 4 angreifende Zwangsführung 6 vorgesehen. Die Zwangsführung 6 gemäß den Fig. 1 und 2 umfasst eine dem feststehenden Gehäuseteil 2 und eine dem verdrehbaren Gehäuseteil 3 zugeordnete noppenförmige Verzahnung 7, die in langlochförmige Ausnehmungen 8 des Leiters 4 eingreifen. Die Verzahnungen 7 sind jeweils einstückig mit dem zugeordneten Gehäuseteil 2, 3 ausgebildet und befinden sich in etwa auf halber Höhe des Leiters 4. Aufgrund der richtungsumkehrenden Schleife 5 sowie der Elastizität bzw. Vorspannung des Leiters 4 liegt derselbe sowohl an dem feststehenden Gehäuseteil 2 als auch an dem dazu verdrehbaren Gehäuseteil 3 umfangsseitig an, so dass das Eingreifen der jeweiligen Verzahnung 7 in die Ausnehmungen des Leiters 4 sichergestellt ist.

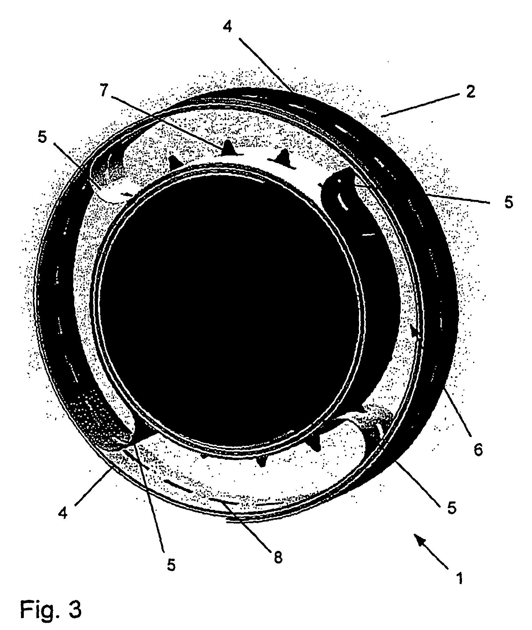

Nach Fig. 3 befinden sich vier Leiter 4 innerhalb des Gehäuses 1, von denen jeder in einer richtungsumkehrenden Schleife 5 geführt ist. Die Schleifen 5 sind gleichmäßig zueinender beabstandet. Zum kontrollierten Auf- bzw. Abwickeln des Leiters 4 von dem bzw. auf das verdrehbare Gehäuseteil 3 (Rotor) bei einer Drehbewegung des Lenkrades ist die Zwangsführung 6 als dem verdrehbaren Gehäuseteil 3 zugeordnete Verzahnung 7 ausgebildet, die in die langlochförmigen Ausnehmungen 8 der Leiter 4 eingreift. Um die Leiter 4 sicher zu führen, ist die Verzahnung 7 trapezförmig gestaltet. Die Führung der Leiter 4 an dem feststehenden Gehäuseteil 2 ist durch die richtungsumkehrenden Schleifen 5 bewirkte Anpresskraft der Leiter 4 an dem feststehenden Gehäuseteil 2 sichergestellt.

## Patentansprüche

1. Elektrische Verbindungseinrichtung, insbesondere zur Anordnung zwischen Lenkrad und Lenksäule eines Kraftfahrzeuges, mit einem feststehenden Gehäuseteil (2) und einem dazu verdrehbaren Gehäuseteil (3), die jeweils eine Anschlusseinheit tragen und mindestens einen spiralförmig aufgewickelten, jeweils endseitig mit den Anschlusseinheiten verbundenen flexiblen elektrischen Leiter (4) umschließen, der in einer richtungsumkehrenden Schleife (5) innerhalb des Gehäuses (1) geführt ist und dem eine formschlüssige Zwangsführung (6) zugeordnet ist, die als dem verdrehbaren Gehäuseteil (3) zugeordnete, in Ausnehmungen (8) des Leiters (4) eingreifende und bei einer Drehbewegung des verdrehbaren Gehäuseteils (3) ein definiertes Ab- bzw. Aufwickeln des Leiters (4) bewirkende Verzahnung (7) ausgebildet ist, **dadurch gekennzeichnet, dass** die Zwangsführung (6) eine dem feststehenden Gehäuseteil (2) zugeordnete Verzahnung (7) umfasst, die in die Ausnehmungen (8) des Leiters (4) eingreift, wobei die Verzahnungen (7) auf einander zugewandten Umfangsflächen der Gehäuseteile (2, 3) angeordnet sind und mehrere Leiter (4) in abwechselnden Lagen in dem Gehäuse (1) angeordnet sind.

2. Verbindungseinrichtung nach Anspruch 1, **dadurch gekennzeichnet, dass** die Verzahnungen (7) einstückig mit dem jeweils zugeordneten Gehäuseteil (2, 3) ausgebildet sind.

3. Verbindungseinrichtung nach Anspruch 1, **dadurch gekenn** **zeichnet, dass** die Ausnehmungen (8) in etwa halber Höhe des Leiters (4) ausgebildet sind.

4. Verbindungseinrichtung nach einem der Ansprüche 1 bis 3, **dadurch gekennzeichnet, dass** die Ausnehmungen (8) als langlochförmige Perforation des Leiters (4) ausgebildet sind, in die die noppenförmigen Verzahnungen (7) eingreifen.

## Claims

1. Electric connecting device, in particular for arranging between the steering wheel and steering column of a motor vehicle, having a fixed housing part (2) and a housing part (3) rotatable relative thereto which each carry a connector unit and enclose at least one helically wound flexible electric conductor (4) which is connected at each end to the connector units and is guided inside the housing (1) in a direction-reversing loop (5) and to which a form-fitting restraining guide (6) is assigned which is constructed as a toothed structure (7) assigned to the rotatable housing part (3), engages in recesses (8) in the conductor (4) and brings about a defined unwinding or rewinding of the conductor (4) in the event of a turning movement of the rotatable housing part (3), **characterised in that** the restraining guide (6) comprises a toothed structure (7) assigned to the fixed housing part (2) which engages in the recesses (8) in the conductor (4), wherein the toothed structures (7) are arranged on circumferential surfaces of the housing parts (2, 3) facing towards one another and a plurality of conductors (4) are arranged in the housing (1) in alternating layers.

2. Connecting device according to claim 1, **characterised in that** the toothed structures (7) are constructed in one piece with the associated housing part (2, 3) in each case.

3. Connecting device according to claim 1, **characterised in that** the recesses (8) are constructed at approximately half the height of the conductor (4).

4. Connecting device according to one of claims 1 to 3, **characterised in that** the recesses (8) are constructed in the form of a slot-shaped perforation of the conductor (4) into which the nub-shaped toothed structures (7) engage.

## Revendications

1. Dispositif de connexion électrique, en particulier à installer entre le volant de direction et la colonne de direction d'un véhicule, avec une partie de boîtier fixe (2) et une partie de boîtier (3) tournant par rapport à celle-ci, lesquelles portent chacune un module de connexion et entourent au moins un conducteur électrique flexible enroulé en spirale (4) qui est relié à chacune de ses extrémités aux modules de connexion, qui est guidé dans une boucle d'inversion de sens (5) à l'intérieur du boîtier (1) et auquel est associé un moyen de guidage forcé par complémentarité de formes (6), lequel est conçu sous la forme d'une denture (7) associée à la partie de boîtier tournante (3), pénètre dans des évidements (8) du conducteur (4) et, en cas de mouvement de rotation de la partie de boîtier tournante (3) provoque un déroulement, respectivement un enroulement du conducteur (4), **caractérisé en ce que** le moyen de guidage forcé (6) comprend une denture (7) qui est associée à la partie de boîtier fixe (2) et qui pénètre dans les évidements (8) du conducteur (4), les dentures (7) étant disposées sur des surfaces périphériques en vis-à-vis des parties de boîtier (2, 3), et plusieurs conducteurs (4) étant disposés dans des positions alternées dans le boîtier (1).

2. Dispositif de connexion selon la revendication 1, **caractérisé en ce que** les dentures (7) sont conçues d'un seul tenant avec les parties de boîtier respectives associées (2, 3).

3. Dispositif de connexion selon la revendication 1, **caractérisé en ce que** les évidements (8) sont ménagés sensiblement à mi-hauteur du conducteur (4).

4. Dispositif de connexion selon une des revendications 1 à 3, **caractérisé en ce que** les évidements (8) sont conformés en perforation en forme de trous oblongs du conducteur (4), dans laquelle s'engagent les dentures en forme de plots (7).
